Europäisches Patentamt

European Patent Office

Office européen des brevets

(19)

(11) Veröffentlichungsnummer: **0 074 669**
**B1**

# (12) EUROPÄISCHE PATENTSCHRIFT

(45) Veröffentlichungstag der Patentschrift:
05.11.86

(21) Anmeldenummer: **82108481.1**

(22) Anmeldetag: **15.09.82**

(51) Int. Cl.⁴: **C 10 J 3/50**, C 10 J 3/56,
**F 23 K 3/02, B 01 J 8/00**

(54) **Vorrichtung zur Dosierung von, insbesondere backenden, Brennstoffen in einen Wirbelschichtreaktor.**

(30) Priorität: **16.09.81 DE 3136645**

(43) Veröffentlichungstag der Anmeldung:
**23.03.83 Patentblatt 83/12**

(45) Bekanntmachung des Hinweises auf die Patenterteilung:
**05.11.86 Patentblatt 86/45**

(84) Benannte Vertragsstaaten:
**BE DE GB IT NL SE**

(56) Entgegenhaltungen:
**DE-A-2 549 784**
**DE-A-2 714 355**
**FR-A-905 202**
**FR-A-2 333 852**
**US-A-2 971 830**

(73) Patentinhaber: **Bergwerksverband GmbH, Franz-Fischer- Weg 61, D-4300 Essen 13 (DE)**

(72) Erfinder: **Peters, Werner, Dr. Prof., Langacker 5, D-4630 Bochum 6 (DE)**
Erfinder: **Kirchhoff, Reinhold, Dr., Hombergsring 56, D-4320 Hattingen (DE)**
Erfinder: **Jüntgen, Harald, Dr. Prof., Bonscheidterstrasse 79, D-4300 Essen 15 (DE)**
Erfinder: **Wagener, Heinrich, Mettestrasse 9, D-4630 Bochum (DE)**
Erfinder: **van Heek, Karl Heinrich, Dr., Fährenkotten 3, D-4300 Essen 15 (DE)**

EP 0 074 669 B1

LIBER, STOCKHOLM 1986

## Beschreibung

Die Erfindung betrifft eine Vorrichtung zur Dosierung von insbesondere backenden Brennstoffen in einen Wirbelschichtreaktor, bei der ein in dem Wirbelschichtreaktor in einer Strahldüse endendes Strahlrohr für die Brennstofförderung von einem mit Fluid (Mantelfluid) beaufschlagten, in einer Manteldüse endenden Mantelrohr umgeben ist.

Die Wirbelschichttechnik wird bereits seit längerer Zeit im Bereich der Brennstoffnutzung angewendet; hierbei kann der Brennstoff fest, flüssig oder gasförmig sein. Bei den in Frage kommenden Prozessen kann es sich u.a. um die Verbrennung, die Vergasung oder die Verflüssigung der Brennstoffe handeln. Bei solchen Verfahren wird im Wirbelschichtreaktor in der Regel eine Wirbelschicht aus einem inerten Material betrieben, wobei der zu verarbeitende Brennstoff möglichst kontinuierlich in den Reaktor eingespeist und Rückstände aus ihm ausgeschleust werden sollen. Hierfür hat sich die sogenannte Strahlaufgabe als eine geeignete Dosiertechnik erwiesen; bei dieser wird der Brennstoff durch ein im Wirbelschichtreaktor endendes Strahlrohr mit einem hierfür geeigneten Fluid gefördert, während sogenanntes Mantelfluid ein das Strahlrohr umgebendes Mantelrohr durchströmt und etwa an der gleichen Stelle wie der Brennstoff durch eine Manteldüse in den Wirbelschichtreaktor eintritt. Das Mantelfluid kühlt das Strahlrohr und verhindert, daß der Brennstoff vor dem Eintritt in die Wirbelschicht bereits in unerwünschter Weise zu reagieren beginnt; außerdem bewirkt das Mantelfluid eine gute Vermischung des Brennstoffes mit dem in der Wirbelschicht vorhandenen Wirbelgut.

Es hat sich herausgestellt, daß die vorbeschriebenen Strahlaufgabeeinrichtungen nur bedingt zu brauchbaren Ergebnissen führen, da vor allem bei zum Verbacken neigenden Brennstoffen, wie z.B. gewisse Kohlesorten, die Kühlung mit Mantelfluid derart intensiv sein muß, daß die Temperaturverteilung im Wirbelbett hiervon ungünstig beeinflußt wird; anderenfalls besteht die latente Gefahr von Verstopfungen im Bereich der Dosiervorrichtung.

Es ist demnach die Aufgabe der Erfindung eine Vorrichtung der eingangs genannten Art bereitzustellen, die die vorbeschriebenen Nachteile vermeidet, d.h., daß sie einen möglichst störungsfreien Dosierbetrieb gewährleisten soll, ohne daß dadurch die Temperaturführung in der Wirbelschicht ungünstig beeinflußt wird.

Die Erfindung wird durch die kennzeichnenden Merkmale des Anspruchs 1 gelöst. - Weiterbildungen der Erfindung sind in den Unteransprüchen wiedergegeben. Hierdurch wird erreicht, daß der in den Wirbelschichtreaktor einzudosierende Brennstoff schnell und unter intensiver Durchmischung mit dem Wirbelgut in den Wirbelschichtreaktor eingespeist werden kann, ohne daß es dabei zu Agglomeratbildungen im Bereich des Brennstoffes kommt und ohne dadurch die Temperaturführung im Wirbelschichtreaktor ungünstig zu beeinflussen; weiterhin wird dadurch die Bandbreite der einsetzbaren Brennstoffe bzw. Brennstoffmischungen erheblich vergrößert.

Es ist erfindungsgemäß also möglich, das Strahlrohr außerordentlich intensiv zu kühlen und dennoch im Bereich der Strahlrohrmündung ein Mantelfluid ausreichend hoher Temperatur bereitzustellen, ohne daß es dadurch zur Agglomeratbildung des Brennstoffes kommt.

Für die Temperaturführung in der Wirbelschicht ist es von besonderem Vorteil, wenn sich erfindungsgemäß der Wärmetauscher in der Wirbelschicht selbst befindet; hierdurch hat das Mantelfluid im Bereich der Manteldüse im wesentlichen die Temperatur der Wirbelschicht selbst.

Besonders bei hohen Arbeitstemperaturen im Wirbelschichtreaktor empfiehlt sich erfindungsgemäß, den innerhalb der Wirbelschicht sich befindenden Wärmetauscher maäanderförmig zu gestalten und ihn hängend anzubringen - sogenannte Lyrabögen können erfindungsgemäß an zumindest einem der Enden des Wärmetauschers angeordnet sein, um eine Elastizität zwischen dem Wärmetauscher und der Dosiervorrichtung zu gewährleisten.

Gemäß einer Weiterbildung der Erfindung wird die Vermischung des Brennstoffes mit dem Wirbelgut besonders intensiv, wenn das Strahlrohr und das Mantelrohr am Ende durch einen ringförmigen Kranz mit aus mindestens einer Bohrung bestehender Manteldüse verbunden sind; dabei können bei Verwendung mehrerer Bohrungen dieselben in verschiedenen Richtungen in bezug auf die Richtung des Strahlrohres angeordnet sein, um den Vermischungseffekt noch weiter zu verstärken.

Gemäß einer Weiterbildung der Erfindung können z. B. thermische Spannungen zwischen dem Strahlrohr und dem Mantelrohr dadurch vermieden werden, daß erfindungsgemäß das Mantelrohr an seinem der Manteldüse entgegengesetzten Ende gegenüber dem Strahlrohr axial verschiebbar ist. Die dadurch entstehende Gleitstelle muß gegenüber dem Mantelfluid bzw. dem Förderfluid für den Brennstoff beweglich gedichtet sein, weshalb sich die Verwendung von hierfür geeigneten an sich bekannten Dichtelementen wie O-Ringen oder dergleichen empfiehlt.

Die Beaufschlagung der Manteldüse mit Mantelfluid, das den Wärmetauscher bereits durchströmt hat, wird dadurch verbessert, und vor allem vergleichmäßigt, wenn erfindungsgemäß zwischen dem austrittsseitigen, also dem heißen Ende des Wärmetauschers und der Manteldüse ein ringförmiger Pufferraum um das Strahlrohr angeordnet ist; dabei sollte der Pufferraum möglichst in unmittelbarer Nähe der Manteldüse vorgesehen sein.

Das Problem der unterschiedlichen Wärmeausdehnung des Strahlrohres und des Mantelrohres kann, gemäß einer Weiterbildung der Erfindung, besonders vorteilhaft durch eine das Strahlrohr im Bereich der Strahldüse umgebende Ringdüse für im Bypass zum Wärmetauscher geführtes Mantelfluid gelöst werden. Durch die erwähnte Ringdüse entsteht ein von kraftschlüssigen Verbindungsstücken freier Spalt zwischen dem Strahlrohr und dem Mantelrohr, so daß unterschiedliche Wärmeausdehnungen problemlos aufgefangen werden können; darüber hinaus bewirkt das im Bypass zum Wärmetauscher durch die Ringdüse strömende Mantelgas, daß sich der erwähnte Spalt nicht mit Wirbelgut, Brennstoff oder dergleichen zusetzen kann. - Eine Führungsbuchse zur gleitenden Führung zwischen dem Strahlrohr und dem Mantelrohr fördert die Stabilität der Vorrichtung; hierbei kann das Mantelgas durch z. B. axial ausgerichtete Rillen in der Führungsbuchse strömen.

Die Wartung, aber auch der nachträgliche Einbau der erfindungsgemäßen Dosiervorrichtung wird dadurch erleichtert, wenn erfindungsgemäß das Mantelrohr an seinem der Manteldüse entgegengesetzten Ende gegenüber dem Strahlrohr gasdicht sowie mittels einer gasdichten Kupplung von der Förderleitung für den Brennstoff trennbar ist.

Sofern der Brennstoff vor seiner Zudosierung in den Wirbelschichtreaktor mit Zuschlagstoffen, wie z. B. Katalysatoren, beaufschlagt werden soll, empfiehlt es sich, gasmäßig vor dem Eintritt des Mantelfluides in die Manteldüse eine Mischkammer für die Zuschlagstoffe mit dem Brennstoff anzuordnen.

Die Beaufschlagung des Mantelrohres mit Mantelfluid kann insbesondere im Falle der vorerwähnten Bypaßschaltung in Verbindung mit einer Ringdüse dadurch verbessert werden, daß erfindungsgemäß mindestens ein Temperaturmeßstutzen in der Wandung des Mantelrohres angeordnet ist. Ggf. können auch Meßeinrichtungen für den Druck und den Durchsatz an Mantelgas vorgesehen sein.

Die Dosierung des Brennstoffes mit der erfindungsgemäßen Einrichtung wird dadurch erleichter, wenn erfindungsgemäß in die Förderleitung für den Brennstoff eine verzweigte Leitung für Förderfluid mit je einem Zweig in Förder- bzw. Gegenrichtung mündet (Steuerdreieck).

Während das vorerwähnte Steuerdreieck für eine getaktete Förderung des Brennstoffes aus einem Förderbunker mit realtiv wenig Fördergas und im Vergleich dazu einen hohen Brennstoffanteil 1 (Dichtstromförderung) geeignet ist, und sicherstellt, daß bei relativ kleinen Wirbelschichtreaktoren die Wirbelschicht nicht lokal mit zu großen Brennstoffmengen beaufschlagt und dadurch gestört wird, ist es bei Wirbelschichtreaktoren mit größerem Brennstoffdurchsatz und/oder bei Verwendung backender Brennstoffpartikel erforderlich, einen so großen Querschnitt für die Brennstofförderleitung vorzusehen, daß bei getakteter Fahrweise und Dichtstromförderung während des Fördertaktes kurzzeitig zu große Brennstoffmengen in die Wirbelschicht gelangen und diese stören. In solchen Fällen wird eine kontinuierliche Dünnstromförderung bevorzugt, bei der eine gleichmäßige kontinuierliche Beaufschlagung der Wirbelschicht mit relativ wenig Brennstoff und relativ viel Fördergas erfolgt.

Eine weitere Verminderung der Störungen im unteren und gegebenenfalls auch oberen Bereich der Wirbelschicht wird durch die Merkmale des Patentanspruches 13 erreicht. Es hat sich nämlich herausgestellt, daß gleichmäßig über den Querschnitt des Wirbelschichtreaktors verteilte vertikale Wärmeaustauschrohre mit unteren und gegebenenfalls oberen, weiten 180° Umlenkbögen lokal zu unerwünschten Erhöhungen und Erniedrigungen der Wirbelgasgeschwindigkeit führen. Verlegt man die unteren und gegebenenfalls auch die oberen miteinander zu verbindenden Wärmeaustauschrohre, zumindest in einem Endbereich, parallel dicht nebeneinander und verbindet sie mit einem kurzen Rohrverbinder, so daß der Umlenkradius dieser 180°-Verbindung die Größe des Außendurchmessers der Wärmeaustauschrohre aufweist, so werden die vorerwähnten Strömungsstörungen nicht mehr festgestellt, ohne daß sich das Wärmeübergangsverhalten zwischen dem Wärmeaustauscher und dem Wirbelgut verschlechtert. Es versteht sich, daß die ärmeaustauschrohre außerhalb der erwähnten Endbereiche auch schräg auseinander- und zusammenlaufen können, sofern der dadurch entstehende Winkel nicht unnötig groß gewählt wird.

Beim Betreiben der erfindungsgemäßen Vorrichtung empfiehlt es sich, wenn erfindungsgemäß das Strahlrohr im Falle einer Unterbrechung der Brennstofförderung weiterhin mit einem Fluid, z. B. dem Förderfluid, in Förderrichtung durchströmt wird. Hierdurch wird vor allem das Eindringen von Material aus dem Wirbelschichtreaktor in das Strahlrohr vermieden sowie das Wiedereinsetzen der Förderung erleichtert.

Im Falle einer Vermischung des Brennstoffes mit Zuschlagstoffen empfiehlt es sich, erfindungsgemäß den Zuschlagstoff in einer im Mantelfluid gelösten Form zu verwenden. Die Fördermenge an Brennstoff kann dadurch besonders einfach gesteuert werden, daß erfindungsgemäß die Förderleitung entgegen der Förderrichtung mit einem Fluidstrom beaufschlagt wird, welcher eine der gewünschten Fördermenge entsprechende Stärke hat.

Sowohl für die Verteilung des frisch in den Wirbelschichtreaktor eindosierten Brennstoffes als auch für die technisch am besten durchführbaren Förderbedingungen des

Brennstoffes bei der Eindosierung ist es von besonderem Vorteil, erfindungsgemäß den Brennstoffdosierstrom getaktet zu fahren.

Die Flexibilität der erfindungsgemäßen Dosierung von Brennstoffen in den Wirbelschichtreaktor wird erfindungsgemäß dadurch verbessert, daß im Bypass zu durch einen Wärmetauscher strömendem Mantelfluid eine einstellbare Mantelfluidmenge das Strahlrohr bis zur Manteldüse hin kühlt; hierdurch wird vermieden, daß etwa durch Wärmeleitung das im Wärmetauscher aufgeheizte Mantelgas im Bereich der Strahldüse Agglomerationen des Brennstoffes oder dergleichen hervorrufen kann, ohne daß dadurch die Temperaturführung im Wirbelschichtreaktor wesentlich beeinflußt wird. Weitere Ziele, Merkmale, Vorteile und Anwendungsmöglichkeite der vorliegenden Erfindung ergeben sich aus der nachfolgenden Beschreibung eines Ausführungsbeispeils anhand der beiliegenden Zeichnung.

In der Zeichnung zeigen:

Fig. 1 eine schematische Darstellung eines Wirbelschichtreaktors mit Dosiervorrichtung zum Teil im Schnitt;

Fig. 2a das reaktorseitige Ende der Dosiervorrichtung im Längsschnitt;

Fig. 2b eine Draufsicht auf die rektorseitige Stirnfläche gemäß Fig. 2a;

Fig. 3 den Bereich des vom Reaktor abgewandten Endes des Mantelohres im Längsschnitt;

Fig. 4a eine Dosiervorrichtung mit Düsenkopf im Längsschnitt;

Fig. 4b eine stirnseitige Draufsicht auf den Düsenkopf gemäß Fig. 4a.

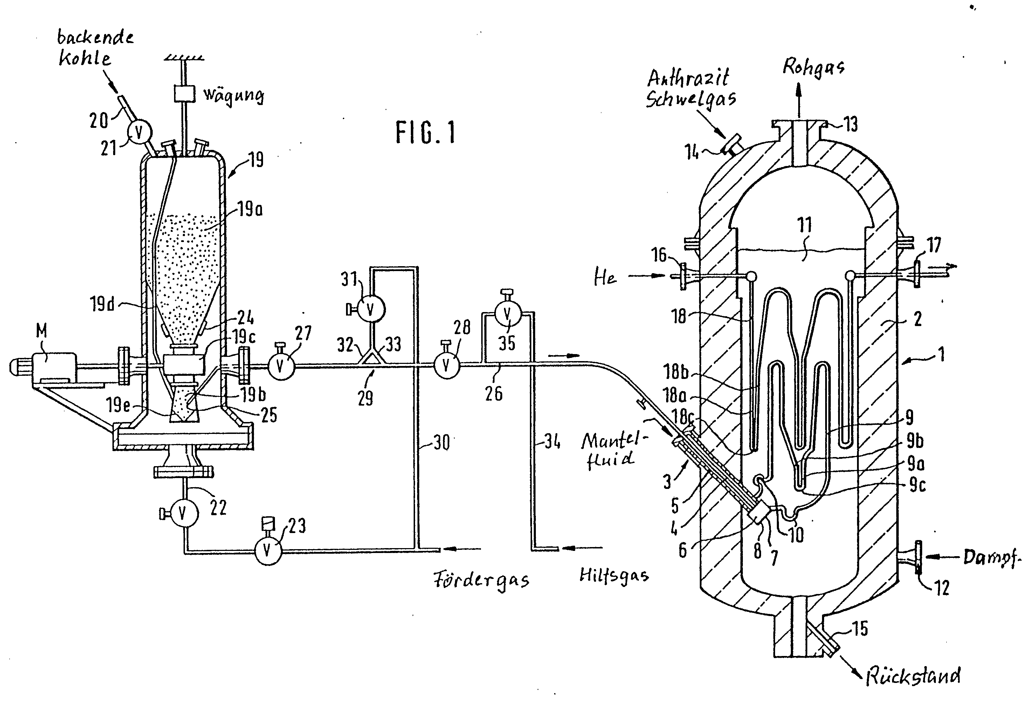

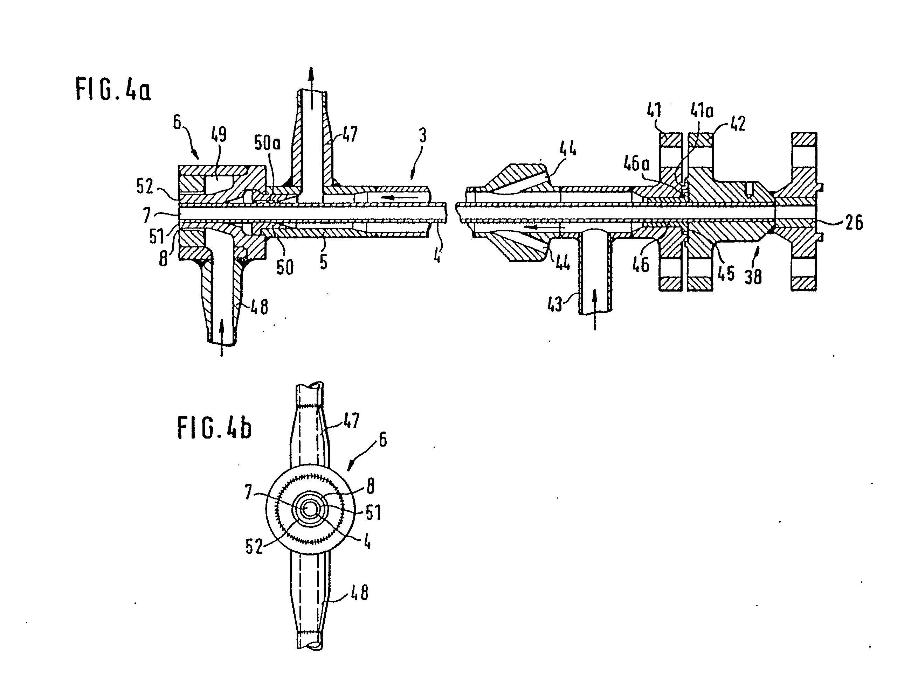

In der Fig. 1 ist mit 1 ein Wirbelschichtreaktor gekennzeichnet, der eine gegenbenenfalls auch isolierte Ummantelung 2 besitzt und z.B. für die Vergasung von Kohle geeignet ist. Die Aufgabe der Kohle erfolgt über die Dosiervorrichtung 3 mit Strahlohr 4 für die Förderung der Kohle und ein das Strahlrohr in seinem reaktorseitigen Endbereich konzentrisch umgebendes Mantelrohr 5 für Mantelfluid. Die Dosiervorrichtung 3 weist innerhalb des Wirkelschichtreaktors 1 einen Düsenkopf 6 auf, aus dem der einzudosierende Brennstoff mit seinem Förderfluid durch eine Strahldüse 7 und das Mantelfluid durch eine Manteldüse 8 austritt. Das Mantelrohr 5 ist kurz vor dem Düsenkopf 6 mit der Manteldüse 8 im Strömungssinne unterbrochen, so daß allenfalls relativ geringe Mengen des Mantelfluides direkt durch die Spaltdüse 51 (s. Fig. 4a/4b) gelangen können; der Hauptstrom des Mantelfluides wird in Strömungsrichtung vor der Unterbrechungsstelle abgezweigt und durch einen im Wirbelschichtreaktor 1 aufgehängten mäanderförmigen Wärmetauscher 9 geleitet und dem Mantelrohr 5 z.B. im Bereich des Düsenkopfes 6 kurz vor der Manteldüse 8 wieder zugespeist. Lyrabögen 10 an den Enden des Wärmetauschers 9 gestatten im gewissen Umfang Positionsänderungen zwischen dem Düsenkopf 6 und dem Wärmetauscher 9.

Innerhalb des Wirbelschichtreaktors 1 wird ein z.B. aus im wesentlichen inerten Material bestehendes Wirbelgut 11 über einen hier nicht dargestellten Anströmboden mit einem Wirbelfluid, z.B. Dampf im Wirbelzustand, gehalten. Das Wirbelfluid gelangt durch den Anschlußstutzen 12 in den Wirbelreaktor 1 und verläßt diesen zusammen mit den Reaktionsgasen (Rohgas) über Auslaßstutzen 13. Außer dem durch die Dosiervorrichtung 3 eingespeisten Brennstoff kann weiterer Brennstoff - wie im Falle der Kohlevergasung Anthrazit und/oder Schwelkoks - über einen Anschlußstutzen 14 im Wirbelschichtreaktor 1 aufgegeben werden. Rückstandsprodukte aus der im Wirbelschichtreaktor 1 erfolgten Nutzung des Brennsoffes können z.B. im Bodenbereich des Wirbelschichtreaktors über einen Auslaßstutzen 15 abgezogen werden. Das Wirbelgut 11 kann z.B. durch einen mit heißem Helium über die Anschlußstutzen 16 und 17 beaufschlagten Wärmetauscher 18 aufgeheizt werden.

Sowohl der Wärmeaustauscher 18 als auch der Wärmeaustauscher 9 können im Bereich der oberen und/oder unteren 180°-Bögen zwischen den hin- und rüchführenden Wärmeaustauschrohren in besonderer Weise gestaltet sein, wie dies in Fig. 1 für jeweils eine dieser Umlenkstellen zum Zwecke der Erläuterung dargestellt ist: Hierbei laufen die Hin- und Rücklaufrohre 9a und 9b bzw. 18a und 18b, zumindest in ihrem unteren oder oberen Endbereich vor der 180°-Umlenkung, nachdem sie sich zunächst unter möglichst kleinem Winkel genähert haben, direkt zusammen und werden an der Umlenkstelle durch einen Rohrverbinder 9c bzw. 18c mit einem Umlenkradius von der Größe des Rohraußendurchmessers der Wärmeaustauschrohre verbunden, diese Verbindung kann kasten-, rohrbogenförmig oder in sonst geeigneter Weise erfolgen - es kommt lediglich darauf an, daß die Querschnittsfläche der Wärmeaustauscher 9 bzw. 18 im Bereich ihrer unteren, ggf. aber auch im Bereich ihrer oberen, 180°-Umlenkstellen nicht durch die meistens verwendeten Umlenkbögen mit größeren Biegeradius vergrößert wird. Die Dosiervorrichtung 3 ist in Fig. 1 unter einem Winkel von etwa 30° in bezug auf die Vertikale in den Wirbelschichreaktor 1 eingeführt und der Düsenkopf befindet sich etwa einen halben Meter oberhalb des Anströmbodens. - Je nach Verwendungszwech ist es aber durchaus auch möglich, die Dosiervorrichtung in jeder beliebigen anderen Richtung in bezug auf den Wirbelschichreaktor anzuordnen. - Ebenso kann eine - in der Zeichnung nicht gesondert dargestellte - Mischkammer für Zuschlagstoff an jeder beliebigen Stelle des Leitungssystems für das Mantelfluid angeordnet sein; bei der Vergasung von Kohle unter Mitwirkung dampfförmiger Katalusatoren empfiehl es sich jedoch besonders, die Mischkammer im Bereich des Wärmetauschers 9 und bevorzugt dort im Bereich seines Gasaustrittsendes anzuordnen. Besonders empfehlenswert ist es, Katalysatoren in Dampf bei hohen Drucken zu lösen un mittels eines gegebenenfalls weiteren Wärmetauschers innerhalb des Wirbelschichreaktors 1 die Lösung des Katalysators unter Wärmezufuhr und unter Entspannung auf den in der Wirbelschicht herrschenden Druck herbeizuführen.

Die Förderung des Brennstoffes kann z.B. - soweit es sich um festes gekörntes Material handelt - dadurch erfolgen, daß ein Förderbunker 19 drucklos mit dem Brennstoff über einen Auschlußstutzen 20 befüllt wird und nach Schließ des Füllventils 21 der Förderbunker 19, z.B. über eine Leitung 22, auf Förderdruck gebracht wird, wobei ein Ventil die Druckregelung vornimmt. Zur Verwirklichung der bereits erwähnten Dünnstromförderung ist der Förderbunker in einen oberen Siloraum 19a und einen unteren Förderraum 19b durch eine als Dosiervorgang wirkende Schleuse 19c, bevorzugt eine durch Motor M Drehzahl regulierbar angetriebene Zellenradschleuse, unterteilt. Das Förderfluid gelangt über einen an geeigneter Stelle angeordneten Anschlußstutzen in den Förderbunker 19 und von dort über Gasverteiler 24 in den unteren Bereich des Siloraumes 19a und durchspült diesen unter Auflockerung aufwärts, so daß der Eintrag in die Zellenradschleuse erleichtert wird. Oberhalb der Füllstandsgrenze sammelt sich dieses Gas in einem Dom, von dem aus es über eine Förderfluidleitung 19d möglichst steil nach unten in den Förderraum 19b gelangt, der an seinem unteren Ende einen Trichter 19e mit einem muldenförmig geschlossenen unteren Ende zur Aufnahme des offenen Endes 25 der Förderleitung 26 aufweist. Durch den zwischen dem offenen Ende 25 und der Mulde im Trichter 19e verbleibenen Düsenspalt gelangt das Fördergas zusammen mit einer vorbestimmten, relativ kleinen Menge Brennstoff aufwärts in die Förderleitung 26. Es ist aber auch möglich, die Förderleitung 26 fallend - wie in der Zeichnung nicht näher dargestellt - an das numehr offene Ende des Trichters 19e anzuschließen und zusätzliche Förderluft nach unten in den Trichter einzublasen. Zum Schutz der Armatur 28 für die Absperrung des Brennstoffstromes (Armatur 27 ist als Notschlußarmatur immer geöffnet) ist vor dieser in die Förderleitung 26 ein Steuerdreieck 29 eingebaut, bei welchem über eine Fördelgasleitung 30 mit mittels Ventil 31 geregeltem Fördergas die Leitungszweige 32, 33 beaufschlagt werden; letztere münden etwa in entgegengesetzter bzw. gleicher Richtung zum Fördergsstrom in Förderleitung 26 und sorgen durch entsprechend gewählte Beaugschlagung mit Fördergs dafür, daß die Förderleitung 26 bis zum völligen Öffnen oder Schließen der Absperrarmatur 28 frei von Festoffpartikeln bleibt. - Natürlich kann durch ein solches Steuerdreieck in Verbindung mit den Ventilen 31 und 32 der Brennstoffstrom zu jeder beliebigen Zeit unterbrochen werden, wodurch z.B. ein getaktetes Eindosieren in den Wirbelschichtreaktor möglich wird.

Wenn die Brennstofförderung unterbrochen ist, kann über eine Leitung 34 mit Ventil 35 die Förderleitung 26 mit einem Hilfsgas beaufschlagt werden, um dadurch ein Eindringen von Wirbelgut aus dem Wirbelschreaktor 1 in die Förderleitung 26 zu verhindern.

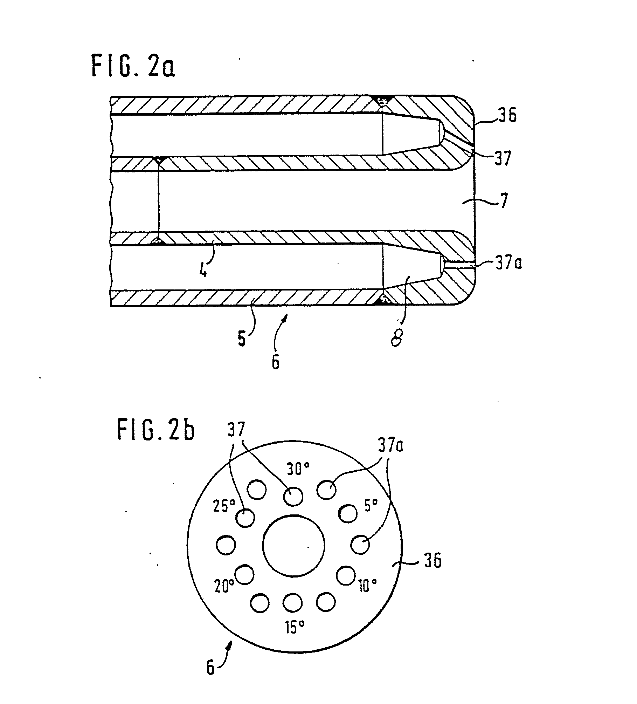

Bei dem in Fig. 2a und 2b dargestellten Düsenkopf 6 sind das Strahlohr 4 und das Mantelrohr 5 an ihren reaktorseitigen Enden durch einen ringförmigen Kranz 36 mit als Bohrungen 37, 37a ausgebildeter Manteldüse 8 verbunden, wobei der vom Kranz 36 eingeschlosene Innerbereich die Strahldüse 7 darstellt. Vorteilhafterweise ist ein Teil der Bohrungen - 37a - in Förderrichtung und der übrige Teil der Bohrungen in einem bestimmten auch unterschiedlichen Winkel zur Förderrichtung angeordnet. Z.B. sind in Fig. 2b die Neigungswinkel zunehmend von 5 bis 30° auf den Förderstrahl hin ausgerichtet, was zu einer besonders intensiven Verteilung des Brennstffes in das Wirbelgut hinein bewirkt.

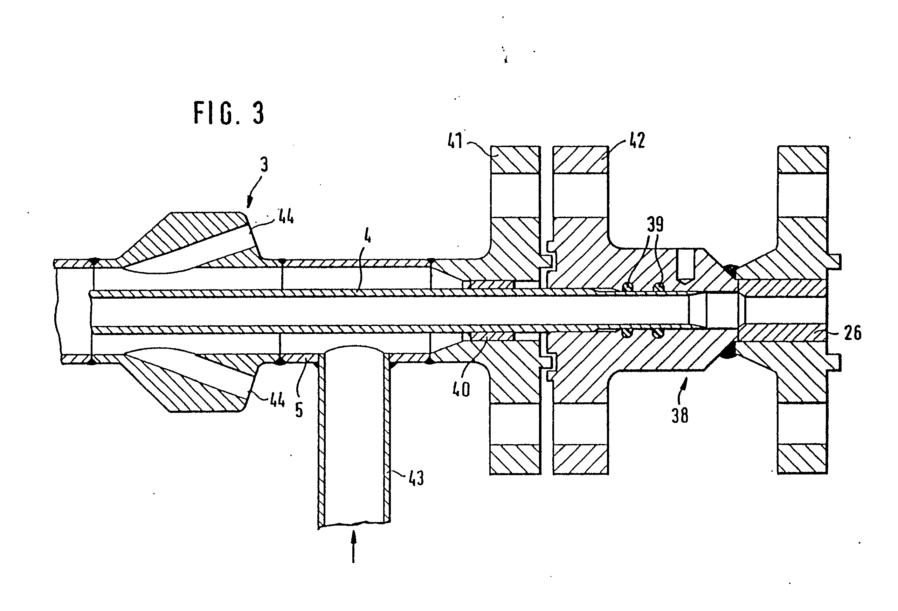

In Fig. 3 ist innerhalb des der Manteldüse 8 entgegengestezten Endes 38 des Mantelrohres 5 das Strahlrohr 4 gasdicht verschiebbar angeordnet, wobei O-Ringe 39 für die Dichtigkeit und eine Führungsbuchse 40 für das Strahlrohr 4 vorgesehen sind und Flanschen 41, 42 ein Abnehmen der Dosiervorrichtung 3 von der Förderleitung 26 gestatten. Über Anschlußstutzen 43 wird das Mantelrohr 5 mit Mantelfluid beaufschlagt, während schräg in das Mantelrohr 5 eingeführte Temperaturmeßstutzen 44 die Einführung von Temperatur aber auch Druckmeßelementen in das Mantelrohr 5 gestatten.

Fig. 4a entspricht in ihrer rechten Hälfte im Wesentlichen der Fig. 3, wobei jedoch auf eine Verschiebbarkeit zwischen dem Strahlrohr 4 und dem Mantelrohr 5 verzichtet wurde, indem eine Führungsbuchse 46 zwischen Strahlrohr 4 und Flansch 41 mit einem Abstand 46a einerseits gengen den Flansch 42 und andererseits gemeinsam mit einem Absatz 41a gegen eine Flachdichtung 45 abgestützt ist. Hierdurch wird einerseits ein gasdichter Abschluß zwischen dem Mantelrohr 5 und dem Strahlrohr 4 und andererseits die Trennbarkeit der Dosiervorrichtung 3 von der Förderleitung 26 erreicht.

Im linken Teil von Fig. 4a ist die Trennstelle zwischen dem Mantelrohr 5 und der Manteldüse 8 zusammen mit dem Düsenkopf 6 dargestellt. Das Mantelfluid verläßt das Mantelrohr 5 zum überwiegenden Teil über Auslaßstutzen 47 und kehrt nach Durchströmen des hier nicht dargestellten Wärmetauschers 9 über Anschlußstutzen 48 zurück zum Düsenkopf 6, wo es sich über einen Ringraum 49 verteilt und durch die Manteldüse 8 den Düsenkopf 6 wieder verläßt. In Strömungsrichtung hinter dem Auslaßstutzen 47 ist die Trennstelle im Mantelrohr durch eine Führungsbuchse 50 zwischen dem Mantelrohr 5 und em Strahlrohr 4 ausgeführt; sie gestattet Relativbewefungen zwischen den beiden Rohren in axialer Richtung und ist mit ein oder mehreren, ggf. auch verstellbaren, Schlitzen 50a für das Durchlassen vorbestimmter Mengen an Mantelfluid versehen. Dieses Mantelfluid kühlt auch den letzten Teil des Strahlrohres 4 und verläßt den Düsenkopf 6 durch eine Spaltdüse 51 zwischen dem Strahlrohr 4 und der strahlrohrseitigen Begrenzung 52 des Ringraumes 49 den Düsenkopf 6, wobei gleichzeitig durch diesen Mantelfluidstrom ein Endringen von Wirbelgut in die Spaltdüse 51 verhindert wird, so daß sich die Führung zwischen dem Mantelrohr 5 und dem Strahlrohr 4 nicht zusetzen kann.

**Beispiel**

In einer Kohlevergasungsanlage gemäß Fig. 1 mit einer Dosiervorrichtung gemäß Fig. 4a/4b werden pro Stunde etwa 0,34 t Einsatzkohle bei einem Druck von 40 bar und einer Temperatur von 820-850° C mit Hilfe von 1400 kg/h Wasserdampf als Wirbelgas vergast. Hierbei entstehen

0,1    t/h Rückstandprodukt (im wesentlichen Mineralien) sowie

816    $m^3$ Rohgas (im Normzustand) mit einer Zusammensetzung

von:    $CH_4$    14,9 Vol.-%         $H_2$    46,8 Vol.-%

      $CO$    15,5 Vol.-%         $CO_2$    22,8 Vol.-%

erzeugt.

Der Wirbelschichreaktor 1 ist zylindrisch und hat einen Innerdurchmesser von ca. 800 mm. Ein eingehängter Heliumwärmetauscher mit einer Wärmetauschfläche von 34 $m^2$ wird 20000 $m^3$ Helium/h im Normzustand durchströmt. Im aufgewirbelten Zustand beträgt die Wirbelschichthöhe oberhalb des Anströmbodens 4000 mm, wobei das Wirbelgut im wesentlichen aus teilvergaster Kohle mit einer durchschnittlichen Körnung von 0,25 mm besteht. Durch die Dosiervorrichtung werden dem Wirbelschichtreaktor 1 pro Stunde 0,34 Tonnen einer backenden Kohle in nachfolgender Zusammensetzung zugeführt:

Gasflammkohle, flüchtige Bestandteile 35 Gew.-% (wasser- und aschefrei) 100% < 1,0 mm

Das Strahlrohr weist einen lichten Durchmesser von 10 mm bei einer Wandstärke von 2 mm auf, während das Mantelrohr einen lichten Durchmesser von 28 mm bei einer Wandstärke von 3,2 mm besitzt. Der Wärmetauscher 9 besteht aus einem aufgehängten mäanderförmigen Rohr mit einem lichten Durchmesser von 16 mm und einer äußeren Oberfläche von ca. 3 $m^2$. Die Strahldüse hat einen Durchmesser von 10 mm und die Manteldüse einen Innendurchmesser von 22 m bei einer Düsenschlitzbreite von 0,8 mm. Der Düsenkopf hat einen Durchmesser von 60 mm und eine ebenso große Länge. Für den Anschluß des Wärmetauschers 9 an die Dosiervorrichtung 3 sind an beiden Enden Lyrabögen mit einem Krümmungsdurchmesser von 250 mm vorgesehen. Der Ringraum und einen Außendurchmesser von 48 mm sowie eine Länge von 40 mm. Die Schlitzbreite der Spaltdüse 51 beträgt 0,5 mm und in der Führungsbuchse 50 sind Schlitze 50a mit einer enstellbaren Schlitzweite von etwa 0,1 mm vorgesehen.

Als Mantelfluid wird Wasserdampf benutzt, welches das Mantelrohr mit 250 kf/h bei einer Temperatur von 280° C und einem Druck von 46 bar durchströmt; hierbei werden 95% des Mantelfluides durch den Wärmetauscher 9 geleitet, während 5% im Bypass durch die Schlitzte 50a und die Spaltdüse 51 direkt in den Wirbelschichtreaktor 1 gelangen. Das Mantelfluid tritt in den Stutzen 48 mit einer Temperatur von etwa 815-845° C wieder ein.

Mit der vorbeschriebenen Anlage wurde jegliches Backen der einzudosierenden Kohle vermieden, ihre gleichmäßige Verteilung im Wirbelschichtreaktor und ohne ungünstige Temperatureinflüsse auf demselben erreicht.

Als Fördergas wurde Stichstoff und alternativ auch erzeugtes Produktgas bei einer Temperatur von 20-190° C und einem Druck von 44 bar verwendet. Während der Förderpause, z.B. bei getakteter Fahrweise, wurde unter sonst gleichen Bendingungen ein Hilfsgas bei einem Mengestrom von etwa 50 $m^3$/h im Normzustand durch das Förder- und Strahlrohr geleitet. Dirch geeignete Einstellung der Ventile 23 und 31 konnte die Brennstofförderung in weitem Umfang geregelt, aber auch schlagartig ab- und angestellt werden.

Während der Anfahrphase wird der Wirbelschichtreaktor 1 durch Anschlußstutzen 14 pro Stunde mit 0,34 t (Anthrazit und/oder Schwelkoks) mit einer Körnung von 100% < 1,0 mm beaufschlagt. Sobald der Reaktor mit diesem "Anfahrgut" gefüllt ist, kann mit Zugabe der Gasflammkohle über dei Dosiervorrichtung 3 unter Rücknahme der Eindosierung von Anthrazit oder Schwelkoks begonnen werden.

## Patentanprüche

1. Vorrichtung (3) zur Dosierung von, inbesondere backenden, Brennstoffen in einen Wirbelschichreaktor (1) bei der ein in dem Wirbelschichtreaktor (1) in einer Strahldüse (7) endendes Strahlrohr (4) für die Brennstofförderung von einem mit Fluid (Mantelfluid) beaufschlagten, in einer Manteldüse (8) endenden Mantelrohr (5) umgeben ist, dadurch gekennzeichnet, daß das Mantelrohr (5) vor der Manteldüse (8) unterbrochen und die unterbrochene Stelle von einem Wärmetauscherrohr (Wärmetauscher) (9) umgangen ist.

2. Vorrichtung nach Anspruch 1, dadurchgekennzeichnet, daß sich der Wärmetauscher (9) in der Wirbelschicht (Wirbelgut) (11) im Wirbelschichtreaktor (1) befindet.

3. Vorrichtung nach Anspruch 2, gekennzeichnet durch eine hängende, määnanderförmige Anordnung des Wärmetauschers (9).

4. Vorrichtung nach Anspruch 2 oder 3, gekennzeichnet durch Lyrabögen (10) zumindest an einem der Enden des Wärmetauschers (9).

5. Vorrichtung nach einem oder mehreren der Ansprüche 1 bis 4, dadurch gekennzeichnet, daß das Strahlrohr (4) und das Mantelrohr (5) am Ende durch einen ringförmigen Kranz (36) verbunden sind und die Manteldüse (8) in mindestens eine Bohrung (37 bzw. 37a) mündet.

6. Vorrichtung nach eine oder mehreren der Ansprüche 1 bis 5, dadurch gekennzeichnet, daß das Mantelrohr (5) an seinem der Manteldüse (8) entgegengesetzten Ende (38) gegenüber dem Strahlrohr (4) axial verschiebbar ist.

7. Vorrichtung nach einem oder mehreren der Ansprüche 1 bis 6, gekennzeichnet durch einen zwischen dem heißen Ende des Wärmetauschers (9) und der Manteldüse (8) angeordneten, ringförmigen Pufferraum (49) um das Strahlrohr (4).

8. Vorrichtung nach einem oder mehreren der Ansprüche 1 bis 7, gekennzeichnet durch mehere in die das Strahlrohr (4) umgebende Führungsbuchse (50) eingearbeitete Schlitze (50a) und eine das Strahlrohr (4) im Bereich der Strahldüse (7) umbebende Ringspaltdüse (51) für im Bypaß zum Wärmetauscher (9) geführtes kaltes Mantelfluid.

9. Vorrichtung nach einem oder mehreren der Ansprüche 1 bis 8, dadurch gekennzeichnet, daß das Mantelrohr (5) an seinem der Manteldüse (8) entgegengesetzten Ende (38) gegenüber dem Strahlrohr (4) gedichtet sowie mittels einer gasdichten Kupplung (39, 42, 46,46a) von der Förderleitung (26) trennbar ist.

10. Vorrichtung nach einem oder mehreren der Ansprüche 1 bis 9, dadurch gekennzeichnet, daß eine an sich bekannte Mischkammer zum Zumischen von Zuschlagstoffen zum Mantelfluid vor dem Anschlußstutzen (48), der den Wärmetauscher (9) mit der Manteldüse (8) verbindet, angeordent ist.

11. Vorrichtung nach einem oder mehreren der Ansprüche 1 bis 10, gekennzeichnet durch mindestens einen Temperaturmeßstutzen (44) in der Wandung des Mantelrohres (5).

12. Vorrichtung nach einem oder mehreren der Ansprüche 1 bis 11, dadurch gekennzeichnet, daß in die Förderleitung (26) für den Brennstoff eine verzweigte Fördergasleitung (30) mit je einem Zweig (32, 33) in Förder- bzw. Gegenrichtung mündet.

13. Vorrichtung nach einem oder mehreren der Ansprüche 1 bis 12, dadurch gekennzeichnet, daß die Wärmeaustauscher (9, 18) innerhalb der Wirbelschicht (11) aus paarweise vertikal angeordneten Hin- und Rücklaufrohren (18a, 18b; 9a, 9b) mit dicht nebeneinander verlaufenden oberen und/oder unteren, mittels 180°-Umlenkungen (9c, 18c) verbundenen Rohrabschitten bestehen.

## Claims

1. Apparatus (3) for supplying fuels, in particular caking fuels, to a fluidized-bed reactor (1), wherein a jet pipe (4) for the supply of fuel, which ends in the fluidized-bed reactor (1) in a jet nozzle (7), is surrounded by a sleeve tube (5), which is acted upon by a fluid (sleeve fluid) and which ends in a sleeve nozzle (8), characterised in that the sleeve tube (5) is interrupted before the sleeve nozzle (8) and the point of interruption is bypassed by a heat exchanger pipe (heat exchanger) (9).

2. Apparatus according to claim 1, characterised in that the heat exchanger (9) is arranged in the fluidized bed (fluidized material) (11) in the fluidized-bed reactor (1).

3. Apparatus according to claim 2, characterised by a suspended, meander-shaped arrangement of the heat exchanger (9).

4. Apparatus according to claim 2 or 3, characterised by flexible U-bends (10) at at least one end of the heat exchanger (9).

5. Apparatus according to one or more of claims 1 to 4, characterised in that the jet pipe (4) and the sleeve pipe (5) are connected at the end by means of an annular rim (36), and the sleeve nozzle (8) opens into at least one bore (37 or 37a).

6. Apparatus according to one or more of claims 1 to 5, characterised in that, at its end opposite the sleeve nozzle (8), the sleeve pipe (5) is axially slidable with respect to the jet pipe (4).

7. Apparatus according to one or more of claims 1 to 6, characterised by an annular buffer space (49) which surrounds the jet pipe (4) and which is arranged between the hot end of the heat exchanger (9) and the sleeve nozzle (8).

8. Apparatus according to one or more of claims 1 to 7, characterised by a plurality of slots (50a) made in a guide bush (50) surrounding the jet pipe (4), and an annular-gap nozzle (51) surrounding the jet pipe (4) in the region of the jet nozzle (7) for cold sleeve fluid, which is conducted in the bypass to the heat exchanger (9).

9. Apparatus according to one or more of claims 1 to 8, characterised in that the sleeve pipe (5) is sealed with respect to the jet pipe (4) at its end opposite the sleeve nozzle (8), and is separable from the supply line (26) by means of a gas-tight coupling (39, 42, 46, 46a).

10. Apparatus according to one or more of claims 1 to 9, characterised in that a mixing chamber known per se for mixing added components together to form the sleeve fluid is arranged upstream of the connecting socket (48) which connects the heat exchanger (9) to the sleeve nozzle (8).

11. Apparatus according to one or more of the claims 1 to 10, characterised by at least one temperature measuring connection piece (44) in the wall of the sleeve pipe (5).

12. Apparatus according to one or more of claims 1 to 11, characterised in that a branched supply gas line (30) having branches (32, 33) in the direction of supply and in the opposite direction, respectively, opens into the supply line (26) for the fuel.

13. Apparatus according to one or more of claims 1 to 12, characterised in that the heat exchangers (9, 18) inside the fluidized bed (11) comprise forward and return pipes (18a, 18b; 9a, 9b) which are arranged vertically in pairs, having upper and/or lower pipe sections extending in close proximity to one another and being connected by 180° deflections (9c, 18c).

**Revendications**

1. Installation (3) pour l'introduction dosée de combustibles, en particulier de combustibles collants, dans un réacteur à lit fluidisé (1), dans laquelle le combustible est introduit dans le réacteur à lit fluidisé (1) à travers un tuyau en acier (4) qui se termine par un dispositif d'éjection central (7) et est entouré d'une enveloppe ou chemise (5), dans laquelle circule un fluide et qui se termine par un dispositif d'éjection latéral (8), caractérisée en ce que la chemise (5) est interrompue en amont du dispositif d'éjection latéral (8) et la solution de continuité est entourée d'un tube d'un échangeur de chaleur (9).

2. Installation suivant la revendication 1, caractérisée en ce que l'échangeur de chaleur (9) est noyé dans (le matériau constituant) le lit fluidisé (11) du réacteur à lit fluidisé (1).

3. Installation suivant la revendication 2, caractérisée en ce que l'échangeur de chaleur (9) a la forme d'un méandre suspendu.

4. Installation suivant la revendication 2 ou 3, caractérisée en ce que l'échangeur de chaleur (9) comprend, au moins à l'une de ses extrémités, des parties en forme de lyre (10).

5. Installation suivant l'une ou plusieurs des revendications 7 à 4, caractérisée en ce que les extrémités du tuyau en acier (4) et de la chemise (5) sont réunies par une couronne annulaire (36) et le dispositif d'éjection latéral (8) débouche dans au moins une ouverture (37 ou 37a).

6. Installation suivant l'une ou plusieurs des revendications 1 à 5, caractérisée en ce que l'extrémité (38) de la chemise, opposée à l'extrémité munie du dispositif d'éjection latéral (8), est mobile en direction axiale par rapport au tuyau en acier (4).

7. Installation suivant l'une ou plusieurs des revendications 1 à 6, caractérisée en ce que le tuyau en acier (4) est entouré, entre l'extrémité chaude de l'échangeur de chaleur (9) et le dispositif d'éjection latéral (8), par une enceinte tampon (49) annulaire.

8. Installation suivant l'une ou plusieurs des revendications 1 à 7, caractérisée en ce que le tuyau en acier (4) est entouré d'un manchon de guidage (50) comportant une série de fentes (50a) et, au niveau du dispositif d'éjection central (7), d'une buse annulaire (51) pour le fluide de refroidissement circulant en dérivation de l'échangeur de chaleur (9).

9. Installation suivant l'une ou plusieurs des revendications 1 à 8, caractérisée en ce que l'extrémité (38) de la chemise (5), opposée à l'extrémité munie du dispositif d'éjection latéral (8), est isolée vis-à-vis du tuyau en acier (4), la chemise (5) pouvant être séparée de la conduite d'alimentation (26) grâce à un dispositif d'accouplement (39, 42, 46, 46a) étanche aux gaz.

10. Installation suivant l'une ou plusieurs des revendication 1 à 9, caractérisée en ce qu'une chambre de mélange connue en soi pour l'introduction d'additifs dans le fluide circulant dans l'enveloppe est disposée en amont de l'ajutage de raccordement (48) de l'échangeur de chaleur (9) au dispositif d'éjection latéral (8).

11. Installation suivant l'une ou plusieurs des revendications 1 à 10, caractérisée en ce qu'au moins une forure (44) pour la mesure de la température est prévue dans la paroi de l'enveloppe (5).

12. Installation suivant l'une ou plusieurs des revendications 1 à 11, caractérisée en ce qu'une conduite pour le gaz de transport (30) à deux branches (32, 33) débouche avec l'une de ses branches dans la direction d'avancement et avec l'autre dans la direction opposée dans la conduite d'alimentation (26) du combustible.

13. Installation suivant l'une ou plusieurs des revendications 7 à 12, caractérisée en ce que, dans le lit fluidisé, les échangeurs de chaleur (9, 18) sont formés de tubes aller et de tubes retour (78a, 18b; 9a, 9b) verticaux disposés par paires et dont les parties terminales supérieures et (ou) inférieures, proches les unes des autres, sont reliées par des tronçons tubulaires permettant un changement de direction de 180°.

FIG. 1

# FIG. 2a

# FIG. 2b

FIG. 3

FIG.4a

FIG.4b